# EUROPEAN PATENT APPLICATION

(11) **EP 4 008 704 A1**
(43) Date of publication of application: **08.06.2022**
(21) Application number: 21200371.9
(22) Date of filing: 30.09.2021
(51) Int. Cl.: C04B 41/87, C04B 41/89, F01D 5/28

(54) **SLURRY-BASED METHODS FOR PATCH REPAIR OF SILICON-BASED ARTICLES**

(30) Priority: 01.12.2020 US 202017108657
(71) Applicant: General Electric Company, Schenectady, NY 12345 (US)
(72) Inventor: SAHA, Atanu, 560066 Bangalore (IN); KISHORE, Manepalli, 560066 Bangalore (IN); ANTOLINO, Nicholas, Niskayuna, 12309 (US); LIPKIN, Don, Niskayuna, 12309 (US); NAGESH, Mamatha, 560066 Bangalore (IN)
(74) Representative: Openshaw & Co.

(57) **Abstract**

Methods for forming a sintered patch on a silicon-based substrate are disclosed. The methods include applying a patch slurry on the silicon-based substrate, drying the patch slurry on the silicon-based substrate to form a dried patch material, and sintering the dried patch material in an oxidizing atmosphere to form a sintered patch on the silicon-based substrate. The patch slurry includes a patch material containing silicates in a fluid carrier.

## Description

### FIELD

This disclosure relates generally to methods for forming a patch repair on a silicon-based component using a patch slurry that includes a patch material in a fluid carrier. The patch material includes a silicate-containing powder, a binder, a viscosity modifier, and a sintering aid. Also provided, are articles having a formed, sintered patch thereon. More particularly, the disclosure relates to slurry-based methods for generating or repairing a silicon-based substrate, including repair of the silicon-based substrate itself, a silicon layer, a silica layer or an environmental barrier coating layer that are present on a silicon-based substrate.

### BACKGROUND

Silicon-based materials are being employed for high temperature components of gas turbine engines such as, for instance, airfoils (e.g., blades, vanes), combustor liners, and shrouds. The silicon-based materials may include silicon-based monolithic ceramic materials, intermetallic materials and composites. Silicon-based ceramic matrix composites (CMCs) may include silicon-containing fibers reinforcing a silicon-containing matrix phase.

Although silicon-based materials exhibit desirable high temperature characteristics, such materials can suffer from rapid recession in combustion environments. For example, silicon-based materials are susceptible to volatilization upon high-temperature exposure to reactive species such as water vapor. In such cases, coatings are used to protect the silicon-based materials. Protective coatings, such as environmental barrier coatings (EBCs), prevent the degradation of silicon-based materials in a corrosive water-containing environment by inhibiting the ingress of water vapor and the subsequent formation of volatile products such as silicon hydroxide (e.g., Si(OH)₄). Thus, an EBC enhances the high temperature environmental stability of silicon-based substrates comprising silicon-based materials. Other desired properties for the EBC include a thermal expansion compatibility with the silicon-based substrate, low permeability for oxidants, low thermal conductivity, and chemical compatibility with the thermally grown silicon-based oxide.

If an EBC experiences a localized spall or a pinhole defect, the underlying substrate may be subject to material loss resulting from water vapor-induced volatilization and subsequent surface recession during operation. If allowed to grow unmitigated, such material loss may reduce the load-bearing capability of the component, disrupt airflow, or even progress to through-thickness holes. This can further lead to ingestion of combustion gases and diversion of highpressure cooling air and adversely affect the operating performance and durability of the machine. A process to locally patch repair missing EBC layers and underlying material of the silicon-based substrate is therefore desired.

### BRIEF DESCRIPTION

Aspects of the present disclosure are directed to methods for for patch repair of silicon-based articles. The method includes applying a patch slurry onto an environmental barrier coating layer on a silicon-based substrate, a silica layer on a silicon-based substrate, a silicon layer on a silicon-based substrate, a silicon-based substrate, or combinations thereof, wherein the patch slurry comprises a patch material in a fluid carrier, wherein the patch material comprises a silicate-containing powder, a binder, a viscosity modifier, and a boron-containing sintering aid; drying the patch slurry to form a dried patch material; and sintering the dried patch material in an oxidizing atmosphere to form a sintered patch.

### DRAWINGS

Various features, aspects, and advantages of the present disclosure will become better understood when the following detailed description is read with reference to the accompanying drawings in which like characters represent like parts throughout the drawings. Unless otherwise indicated, the drawings provided herein are meant to illustrate only the key features of the disclosure. These key features are believed to be applicable in a wide variety of systems which comprises one or more embodiments of the invention. As such, the drawings are not meant to include all conventional features known by those of ordinary skill in the art to be required for practicing the invention.
FIG. 1 is a schematic cross-sectional view of an article including a silicon layer, a silica layer and an EBC formed on a silicon-based substrate.
FIGs. 2A-2D are schematic cross-sectional views of an article that is damaged in the surface region at one or more locations, in accordance with some embodiments of the present disclosure.
FIGs. 3A-3D are schematic cross-sectional views of an article having a dried patch material in one or more damaged locations, in accordance with some embodiments of the present disclosure.
FIGs. 4A-4D are schematic cross-sectional views of an article having a sintered patch in one or more damaged locations, in accordance with some embodiments of the present disclosure.
FIG. 5A depicts the pull strength for a sintered EBC patch containing a sintering aid.
FIG. 5B depicts the linear shrinkage for a sintered EBC patch containing a sintering aid.
FIG. 6A depicts the pull strength for an EBC patch, in accordance with some embodiments of the present disclosure.
FIG. 6B depicts the erosion rate for an EBC patch, in accordance with some embodiments of the present disclosure.
FIG. 6C depicts the scratch depth for a sintered EBC patch, in accordance with some embodiments of the present disclosure.

### DETAILED DESCRIPTION

In the following specification and the claims that follow, the singular forms "a," "an," and "the" include plural referents unless the context clearly dictates otherwise. Approximating language, as used herein throughout the specification and claims, may be applied to modify any quantitative representation that could permissibly vary without resulting in a change in the basic function to which it is related. Accordingly, a value modified by a term "about" may not be limited to the precise value specified, and may include values that differ from the specified value. A value modified by a term "substantially" can include values that differ to an extent that the intended function is maintained. In at least some instances, the approximating language may correspond to the precision of an instrument for measuring a value.

To more clearly and concisely describe and point out the subject matter, the following definitions are provided for specific terms, which are used throughout the following description and the appended claims, unless specifically denoted otherwise with respect to particular embodiments.

As used herein, the term "silicon-based substrate" is a substrate that includes silicon, a silicon alloy, a compound having silicon and at least one other element, or a combination of silicon alloy and the compound having silicon and the at least one other element. As used herein in the context of silicon-containing powders, the terms "silicon" and "silicon-based alloy" refer to their respective unoxidized forms. The term "slurry" as used herein refers to a mixture of at least one solid constituent with at least one liquid constituent. The term "sintering aid" as used herein refers to a material that decreases the sintering temperature of the dried patch material and/or enhances sintering kinetics of the dried patch material at a particular sintering temperature. The term "viscosity modifier" refers to a material that alters rheology of the slurry as a function of applied stress and/or shear rate during deposition of the slurry. An "oxidizing atmosphere" is an atmosphere that contains sufficient oxygen partial pressure to cause an oxidation reaction and may include air and combustion gas.

Advantageously, it has been discovered herein that use of the patch slurry as described can be used to patch damaged regions of an EBC-coated silicon-based substrate without requiring the application of additional bonding material layers, such as silicon-bonding material layers. Accordingly, regions of missing or partially missing EBC layer on a silicon-based substrate can be repaired in a more timely and cost effective manner as compared to other processes. Furthermore, the patch slurry can be used to repair said regions of missing or partially missing EBC layers on the silicon-based substrate *in situ*, thus minimizing or eliminating the need to disassemble the machine, such as a turbine engine, as would be required for conventional component repairs.

Indeed, damaged areas of a repair region can include damage to the EBC, silica layer, silicon layer, and/or silicon substrate. Accordingly, the slurry provided herein can be applied to the damaged areas of the article and can facilitate repair of the EBC, silica layer, silicon layer, and silicon-based substrate. Accordingly, some embodiments of this disclosure recite a method for forming a sintered patch on a silicon-based substrate. Thus, the sintered patch can be formed on any of the afore-mentioned layers including the EBC layer, silica layer, silicon layer, and/or the silicon-based substrate itself.

The method for forming the sintered patch includes applying a patch slurry on a damaged area of a silicon-based substrate. The damaged area can include the silicon-based substrate itself, the silica layer present on the silicon-based substrate, the silicon layer present on the silicon-based substrate, the EBC layer present on the silicon-based substrate, and any combination thereof. The method includes drying the patch slurry on the silicon-based substrate to form a dried patch material, and sintering the dried patch material in an oxidizing atmosphere to form a sintered patch on the silicon-based substrate. The patch slurry includes a patch material in a fluid carrier. The patch material includes a silicate-containing powder, a binder, a viscosity modifier, and a sintering aid. The silicate-containing powder includes a plurality of particles. The binder may include a silicone-based material. The sintering aid may include elemental boron, boron alloys, or boron-containing compounds.

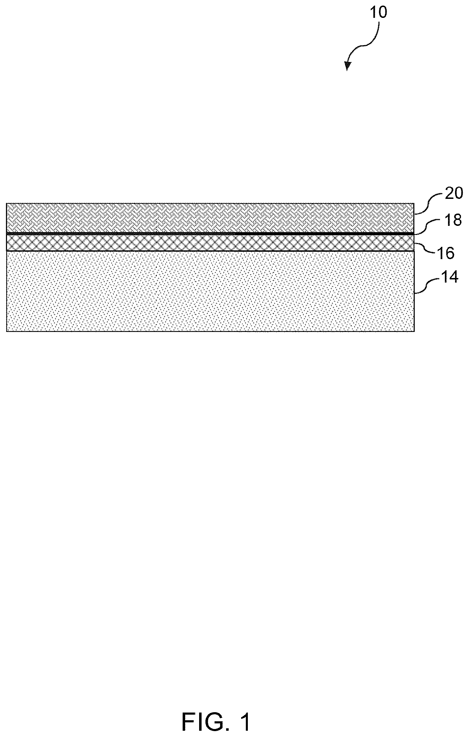

FIG. 1 is a cross-sectional view of an article 10 for use with high temperature components, in accordance with one or more aspects of the present disclosure. In some embodiments, the article 10 may be in the form of blades, vanes, combustor liners, or shrouds of gas turbine engines. In the illustrated figure, a silicon-based substrate 14 is provided. The silicon-based substrate 14 may be selected for its high temperature mechanical, physical, and/or chemical properties. The silicon-based substrate 14 may include any silicon-containing material, such as a silicon-containing ceramic, a silicon containing metal alloy, a silicon-containing intermetallic , or a composite comprising combinations of the above. In some embodiments, the silicon-based substrate 14 includes a ceramic matrix composite (CMC) which includes a silicon carbide containing matrix reinforced with silicon carbide fibers. In another example, the silicon-based substrate 14 may be a silicon-based monolithic ceramic material, for instance silicon carbide (SiC), silicon nitride (Si₃N₄) or a combination of SiC and Si₃N₄. In some embodiments, the silicon-based substrate 14 may be fabricated from a material that can withstand combustion environments at operating temperatures greater than 1150°C for a duration exceeding 20,000 hours. In FIG. 1, a silicon layer 16 is present over the silicon-based substrate 14, a silica layer 18 is present over the silicon layer 16, and an EBC layer 20 is present over the silica layer 18.

The silicon layer 16 is a chemical barrier, preventing oxidation of the silicon-based substrate 14 by forming a protective thermally grown silicon oxide (e.g. the silica layer 18). In some embodiments, the silicon layer 16 promotes the adhesion of the EBC layer 20. In some embodiments, the silicon layer 16 includes elemental silicon, a silicon alloy, a metal silicide or combinations thereof. The silicon layer 16 may have a thickness in a range from about 25 microns to about 150 microns. In some embodiments, the silica layer 18 may have an initial (as-formed) thickness in a range from about 1 micron to about 10 microns. The thickness of the silica layer 18 may further increase due to the oxidation of the underlying silicon layer 16 in use.

The EBC layer 20 may provide a thermal barrier as well as a hermetic seal against the corrosive gases in the hot combustion environment and thus protect the underlying silica layer 18, silicon layer 16, and silicon-based substrate 14 from overheating and/or thermochemical attack. By way of example, as described above, the protective coatings present over silicon-based substrate 14 advantageously facilitate inhibition of oxidation, overheating, and/or volatilization of the silicon-based substrate material in a hot combustion environment of a gas turbine engine.

In some embodiments, the EBC layer 20 may have a thickness in a range from about 25 microns to about 1000 microns. In some embodiments, the EBC layer 20 may comprise one or more rare earth (RE) silicates. In some embodiments, the silicate of the RE element may include, but is not limited to, a rare earth monosilicate (RE₂SiO₅), a rare earth disilicate (RE₂Si₂O₇), or a combination of RE₂SiO₅ and RE₂Si₂O₇. In some embodiments, the RE element in the RE silicate may include at least one of yttrium, scandium, and elements of the lanthanide series. By way of example, the RE elements may include yttrium, ytterbium, or lutetium.

The EBC layer 20 may include one or more layers. Optionally, one or more additional coatings may be located above or below the EBC layer 20. Such additional coatings may provide additional functions to the article 10, such as further thermal barrier protection, recession resistance, abradable sealing, thermochemical resistance to corrosion, resistance to erosion, resistance to impact damage, and/or resistance to inter-diffusion between adjacent layers. In some embodiments, the EBC layer 20 and the optional one or more layers may have a coefficient of thermal expansion that is substantially close to a coefficient of thermal expansion of the silicon-based substrate 14. Typically, a mismatch in coefficient of thermal expansion between EBC and the silicon-based substrate is within ±3 parts per million per degree Kelvin.

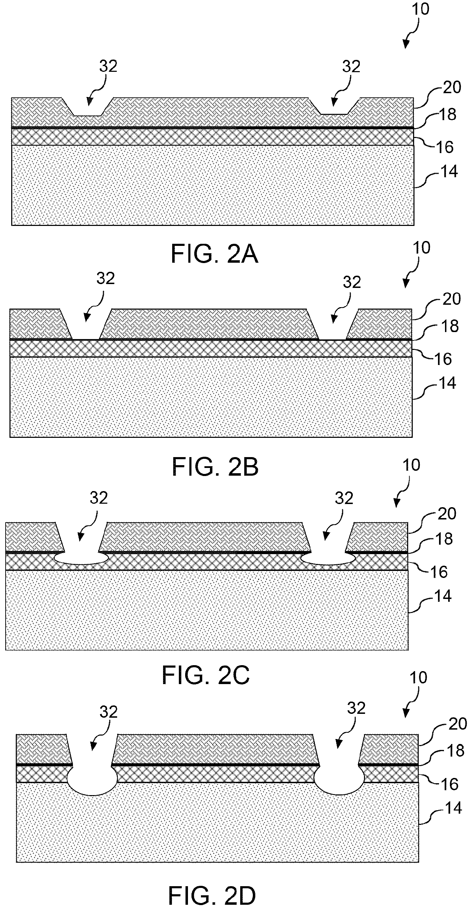

FIGs. 2A-2D show a cross-sectional view of an exemplary article 10, having a damaged area 32 on its surface. Depending on the severity of the damage to the article 10, there may be partial or complete spallation of the EBC layer 20 (see FIG. 2A). Material loss may further be accompanied in use by recession in the silica layer 18 (see FIG. 2B), the silicon layer 16 (see FIG. 2C), and/or the silicon-based substrate 14 itself (see FIG. 2D). As illustrated in FIGs. 2A-2D, the damaged area 32 can include any combination of material loss to the EBC layer 20, the silica layer 18, silicon layer 16, and silicon-based substrate 14. By way of example, the article 10 can include combinations of damaged areas 32 as provided in FIGs. 2A-2D. Repair of the damaged areas 32 as shown in FIGs. 2A-2D may be accomplished by methods of repair using the patch slurry deposition as described in this disclosure.

In some embodiments, forming a sintered patch includes forming a patch slurry and applying it to the damaged area 32, drying the patch slurry to form a dried patch material, and sintering the dried patch material in an oxidizing atmosphere to form a sintered patch. In some embodiments, applying the patch slurry to the damaged area includes applying the patch slurry to the silicon-based substrate 14, the silicon layer 16, the silica layer 18, and/or the EBC layer 20 of the silicon-based substrate 14. The patch slurry includes a patch material in a fluid carrier. In some embodiments, the patch slurry consists essentially of the fluid carrier and the patch material. The patch material includes a silicate-containing powder, a binder, a viscosity modifier, and a sintering aid. In some embodiments, the patch material consists essentially of the silicate-containing powder, a binder, a viscosity modifier, and a sintering aid without having any other material that would affect the functioning of the eventually formed sintered patch.

As mentioned earlier, the method of forming the sintered patch includes applying the patch slurry onto the damaged area 32 of the silicon-based substrate 14. The patch slurry includes a patch material in a fluid carrier. The patch material may include a silicate-containing powder, a binder, a viscosity modifier, and a sintering aid.

The silicate-containing powder may include at least one of a rare earth monosilicate (RE₂SiO₅) or a rare earth disilicate (RE₂Si₂O₇). Suitable non-limiting examples also include zirconium silicate (ZrSiO₄), hafnium silicate (HfSiO₄), aluminum silicate (e.g., 3:2 mullite, having a chemical formula Al₆Si₂O₁₃), and combinations thereof.

The silicate-containing powder may also include silica (SiO₂). In certain embodiments, patch material contains sufficient silica to form a silica-rich or borosilicate-rich glass during sintering. For example, the sintered patch can include silica-rich or borosilicate-rich glass after being sintered. In embodiments, the molar ratio of silica to the total silicate is less than 0.2.

The binder in the patch material facilitates application of the patch slurry to the silicon-based substrate, promotes adhesion of the patch slurry to the silicon-based substrate and/or improves the green strength of the patch slurry after drying. The binder may be an inorganic binder or an organic binder. In certain embodiments, the binder is an organic binder primarily composed of elements that volatilize during heat treatment, such as binder burnout or sintering, such that they are not present in the final patch. Non-limiting examples of such binders include monoethylene glycol, diethylene glycol, triethylene glycol, tetraethylene glycol, glycerol, polyethylene glycol (PEG), dibutyl phthalate, bis(2-ethylhexyl) phthalate, bis(n-butyl) phthalate, butyl benzyl phthalate, diisodecyl phthalate, din-octyl phthalate, diisooctyl phthalate, diethyl phthalate, diisobutyl phthalate, din-hexyl phthalate, di(propylene glycol) dibenzoate, di(ethylene glycol) dibenzoate, tri(ethylene glycol) dibenzoate, polyvinyl pyrrolidone (PVP), or any combinations thereof. In certain embodiments, the binder is PVP.

In some embodiments, the binder may include a silicon-based material. For example, in some embodiments, the EBC binder may be a silicon-based resin material such as, for instance, a cross-linked polyorganosiloxane resin. In some embodiments, the cross-linked polyorganosiloxane resin may be, but is not limited to, a silicone resin.

In certain embodiments, the patch slurry may include a viscosity modifier. Suitable viscosity modifiers may include polyethylene glycol (PEG), dimethylsiloxane, silicone oil, phthalates, adipates, glycerin, or combinations thereof. The viscosity modifier may be present in an amount of from about 0.05 weight% to about 0.7 weight% of the patch material.

Optionally, in certain embodiments, the patch slurry can further include one or more silicon-containing powders in addition to the silicate-containing powder. For instance, suitable silicon-containing powders can include metallic silicon, a silicon alloy, a metal silicide, or a combination thereof. In some embodiments, the silicon alloy includes boron. In certain embodiments, the silicon alloy is an alloy of silicon and boron. In some embodiments, the silicon alloy may include alloying elements such as germanium, aluminum, nitrogen, phosphorous, iron, or a combination thereof.

Various compositions and amounts of sintering aids may be used. In some embodiments, the sintering aid may include metallic oxides. Non-limiting examples of metallic oxides that can be used as sintering aid include iron oxide, gallium oxide, manganese oxide, aluminum oxide, nickel oxide, titanium oxide, boron oxide, and alkaline earth oxides. In some embodiments, a sintering aid may include a metal. Non-limiting examples of metallic sintering aids include iron, aluminum, boron, and nickel. In an exemplary embodiment, the sintering aid is boron. In some embodiments, the boron may at least partially oxidize during sintering and the resulting boron oxide may function as the sintering aid. In some embodiments, a sintering aid may include hydroxides, carbonates, oxalates, or any other salts of the above-mentioned metallic elements. In some embodiments, a median particle size of the sintering aid used herein is less than 1 µm.

In some embodiments, the fluid carrier may partially or fully dissolve the binder, the sintering aid, or a combination thereof. The fluid carrier may be organic or aqueous. Non-limiting examples of suitable organic solvents that can be employed as a fluid carrier include methanol, ethanol, propanol, butanol, pentanol, hexanol, heptanol, octanol, nonanol, decanol, dodecanol, diacetyl alcohol, acetone, methyl isobutyl ketone (MIBK), methyl ethyl ketone (MEK), toluene, heptane, xylene, ether, or combinations thereof. In certain embodiments, the fluid carrier includes diacetone alcohol. The fluid carrier may further include an additional solvent which, in some embodiments, facilitates dissolving of a silicon-based binder. In a non-limiting example, silicone is used as the binder in a diacetone alcohol fluid carrier, where diacetone alcohol dissolves the silicone. In some embodiments, the fluid carrier may include a particular combination of two or more liquids.

The strength, volumetric density, degree of oxidation, and hermeticity of a sintered patch in the damaged area 32 may depend on the patch slurry characteristics and/or processing methods. For example, slurry characteristics can include relative amounts of the patch material and the fluid carrier in the patch slurry, particle size distribution of the patch material constituents, the type of binder, the amount of the binder, the type of sintering aids, the amount of the sintering aids, the type of viscosity modifier, the amount of viscosity modifier or any combination thereof. These properties may further vary depending on the processing methods, such as, for example, the methods used for applying the patch slurry, drying the patch slurry, and/or sintering the dried patch material.

The relative amounts of patch material and fluid carrier in the patch slurry may affect the consistency and viscosity of the patch slurry, as well as the porosity, adhesion and/or strength of the dried patch material and the sintered patch. In some embodiments, the patch slurry includes the patch material in an amount from about 50 volume % to about 75 volume %, with fluid carrier comprising the balance. In some embodiments, the patch slurry includes the patch material in an amount from about 55 volume % to about 75 volume %, with fluid carrier comprising the balance. In certain embodiments, the patch slurry includes the patch material in an amount from about 60 volume % to about 70 volume %, with fluid carrier comprising the balance.

In some embodiments, the patch material includes the binder in an amount from about 2 weight % to about 9 weight % of the silicate-containing powder. In certain embodiments, the patch material includes the binder in an amount from about 4 weight % to about 6 weight % of the silicate-containing powder.

In some embodiments, the patch material includes the viscosity modifier in an amount of from about 0.05 weight% to about 0.7 weight % of the patch material.

In certain embodiments, the patch material may include the sintering aid in an amount of from about 0.2 weight % to about 8 weight% based on the total weight of the silicate-containing powder present in the patch material. In certain embodiments, the patch material may include the sintering aid in an amount of from about 0.4 weight % to about 2 weight% based on the total weight of the silicate-containing powder present in the patch material.

In such embodiments, particle size distribution of the silicate-containing powder used in the patch material may be important in determining the mechanical integrity, porosity, and processability of the disposed coating. In some embodiments, the silicate-containing powder includes a plurality of small particles with median particle size less than 1 micron. The median particle size of powders is measured as median diameter by volume. The median diameter by volume may be measured using various methods, such as, for example, using laser scattering.

In some embodiments, the silicate-containing powder used for forming the patch material includes a bimodal distribution of particles. The silicate-containing powder having a bimodal distribution of particles may include small and medium particles or small and large particles. In some embodiments, the silicate-containing powder used for forming the patch material includes a trimodal distribution of particles that includes a distribution of large, medium, and small particles. Appropriate selection and control of size and volume fractions of the large, medium, and small particles of the silicate-containing powder may aid in providing the EBCs with the desired properties for a particular application.

In some embodiments, the silicate-containing powder is present in the form of a plurality of particles having a multimodal distribution. Multimodal distribution of particles improves packing density by filling voids created by larger particles with finer particles. Larger particles provide a shrinkage-resistant backbone to the patch and medium particles act as filler, while finer particles promote sintering and bonding to adjacent particles and the silicon-based substrate. Multimodal distribution of the particles thus helps minimize patch shrinkage (during drying and/or sintering), mitigating cracking and delamination, therefore enabling thicker patches.

In embodiments, the silicate-containing powder can include a plurality of particles having a multimodal distribution. In some embodiments, the silicate-containing powder can include a plurality of small particles with median particle size less than 1 micron. The plurality of small particles is present in an amount of from about 10 volume % to about 50 volume % of the silicate-containing powder. The silicate-containing powder can include a plurality of medium particles with median particle size in a range from 1 micron to 8 microns. The plurality of medium particles is present in an amount of from about 10 volume % to about 50 volume %. The silicate-containing powder can include a plurality of large particles with median particle size greater than 8 microns. The plurality of large particles is present in an amount of from about 20 volume % to about 60 volume % of the silicate-containing powder.

In certain embodiments, it may be desired to use silicate-containing powder comprising small particles. A known challenge in using a slurry having predominately small-sized particles is the occurrence of excessive sintering shrinkage and subsequent cracking. In order to compensate for such shrinkage, elemental silicon, silicon alloy, and/or metal silicide, can be combined with the silicate-containing powder in the slurry such that a thicker sintered patch can be achieved. For instance, during sintering in an oxidizing atmosphere, the elemental silicon, silicon alloy, or metal silicide undergo oxidation to compensate for shrinkage experienced by the silicate-containing powders due to sintering.

An example method of forming a sintered patch includes forming a patch slurry, applying the patch slurry on a damaged area of a silicon-based substrate, drying the patch slurry to form a dried patch material, and sintering the dried patch material in an oxidizing atmosphere to form a sintered patch. The patch slurry includes a patch material in a fluid carrier. The patch material may include a silicate-containing powder, a binder, a viscosity modifier, and a sintering aid. The silicate-containing powder may also include at least one of silicon, a silicon alloy, a metal silicide.

A general process for preparing the patch slurry includes mixing a silicate-containing powder, such as a silicate-containing powder, the binder, the viscosity modifier, and the sintering aid with the fluid carrier. The slurry may be formed using conventional techniques of mixing known to those skilled in the art, such as shaking, ball milling, attritor milling, or mechanical mixing. Ultrasonic energy may be simultaneously used along with the above-mentioned mixing methods to help break apart any agglomerated particles that may be present in the patch slurry.

In some embodiments, the patch slurry may be disposed on damaged area 32 of article 10 to make a slurry patch using any conventional slurry deposition method known to those skilled in the art, including but not limited to, dipping the component into a slurry bath, painting, rolling, stamping, spraying, syringe-dispensing, extruding, spackling or pouring the slurry onto the damaged area 32 of the silicon-based substrate. In some embodiments, undamaged areas of the EBC layer 20 and/or silicon-based substrate 14 may be masked to prevent deposition of the patch slurry onto the undamaged areas. The patch slurry may optionally be mechanically agitated before disposing on the silicon-based substrate 14 by any method known to those skilled in the art to affect adequate dispersion of the silicate-containing powder, the binder, the viscosity modifier, and the sintering aid in the slurry and ultimately in the dried patch material formed after drying the patch slurry.

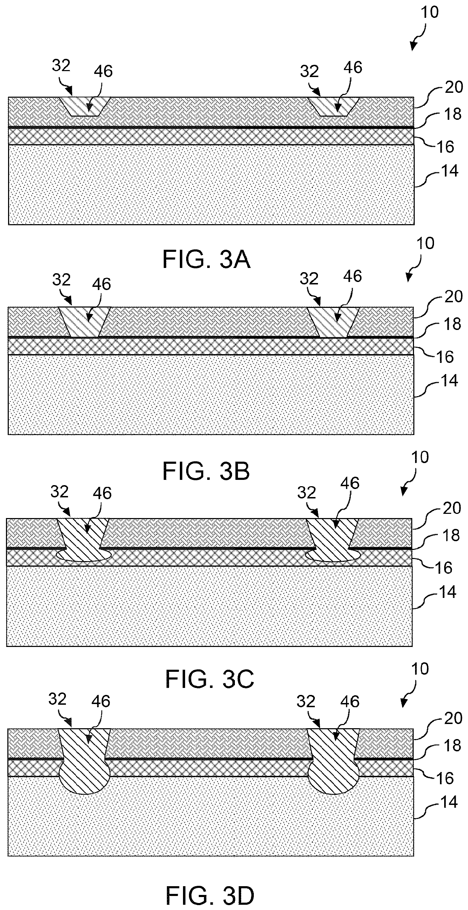

In some embodiments, drying of the patch slurry occurs under ambient conditions through evaporation of the solvent. In some other embodiments, drying of the patch slurry is carried out as a separate step. In some embodiments, drying is carried out during any further heat-treatment of the patch slurry such as, for example, binder burnout or sintering. FIGs. 3A-3D illustrate the silicon-based article having a dried patch material 46 disposed in the damaged areas 32 of the article 10.

The thickness of the dried patch material may be controlled either during the step of disposing the patch slurry or by removing excess slurry material after deposition, before or after drying. In some embodiments, the thickness of the dried patch material may be in a range from about 25 microns to about 1000 microns.

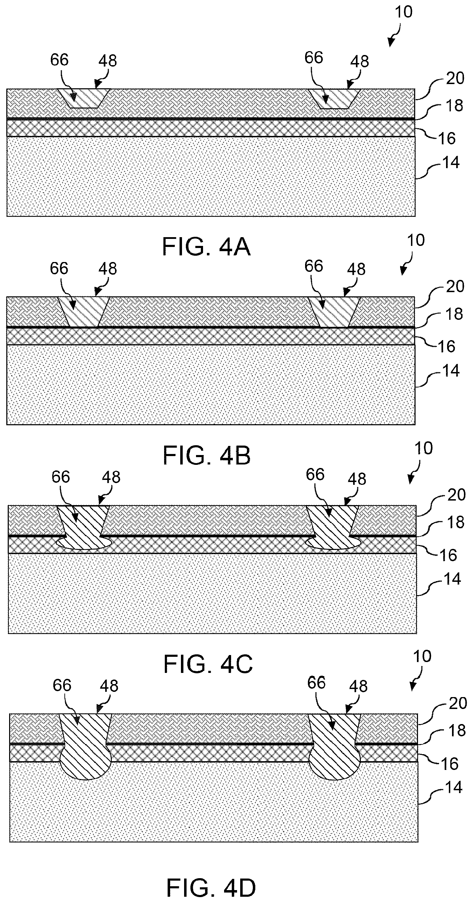

The dried patch material is subsequently sintered to form the sintered patch on the silicon-based substrate. In some embodiments, the sintering is carried out by heat treatment in an oxidizing atmosphere at a temperature greater than 950°C. In some embodiments, the sintering may be carried out by operating the turbine, thereby bringing the dried patch material to a temperature high enough to sinter. In some embodiments, the sintering includes heating at a temperature between about 1000°C and 1400°C for at least 1 minute. In certain embodiments, the method includes sintering at a temperature greater than 1150°C and less than 1375°C for a duration in a range from about 2 hours to about 48 hours. In some embodiments, the dried patch material 46 may be subjected to an optional binder removal step before the above-mentioned sintering step. Binder removal may be carried out by a slow and/or step-wise heating of the dried patch material to a temperature less than 800°C in an oxidizing atmosphere, such as air. A slow and/or step-wise heating of the dried patch material 46 helps to dissociate any bound fluid and to burn out the binder without generating excessive gas pressures that may degrade the integrity of the dried and sintered patch materials. FIGs. 4A-4D illustrate the silicon-based article having a sintered patch 66 disposed in the repaired area 48 of the article 10. In certain embodiments, the repaired area 48 represents the damaged area 32 that has been repaired with the patch slurry according to methods disclosed herein.

Sintering facilitates neck formation between silicate containing powders from the patch material, resulting in increased patch strength.

The sintering step is carried out in an oxidizing atmosphere. The oxidizing atmosphere includes ambient air. In some embodiments, the oxidizing atmosphere during sintering includes combustion gases that may be present around the article 10 during operation.

The binder removal and sintering steps may be affected in a separate heating step or during the first operation of the article 10. The binder removal and sintering steps may be affected using a conventional furnace or by using methods such as, for example, microwave, laser, combustion torch, plasma torch, and infrared heating. In some embodiments, sintering may be accomplished by heating the dried patch material 46 at a rate from about 1°C/min to about 500°C/min to a temperature in a range from 1150°C to 1400°C and holding at that temperature for up to about 48 hours. In another embodiment, sintering may be accomplished by heating the dried patch material 46 at a rate from about 5°C/min to about 10°C/min to a temperature in a range from 1200°C to 1375°C and holding at that temperature for up to about 48 hours.

In some embodiments, especially during in situ repair of the article 10, the drying of the patch slurry and sintering of the dried patch material may be achieved in situ. For example, the patch formed by the patch slurry may be dried at the ambient temperatures and sintered during the first high temperature operation of the article 10.

The article may be formed using one or more methods disclosed hereinabove. In some embodiments, the article is a new component having the sintered patch formed by any one of the slurry deposition techniques disclosed above. In some embodiments, the article includes a repaired portion having the sintered patch 66.

The sintered patch 66 is formed by any one of the slurry deposition methods described above. In certain embodiments, repaired portions 48 of the article 10 are constructed by applying the patch slurry on the silicon-based substrate 14, drying the patch slurry to form a dried patch material, and sintering the dried patch material in an oxidizing atmosphere.

### EXAMPLES

The following example illustrates methods, materials, and results, in accordance with specific embodiments, and as such should not be construed as imposing limitations upon the claims.

### Example 1

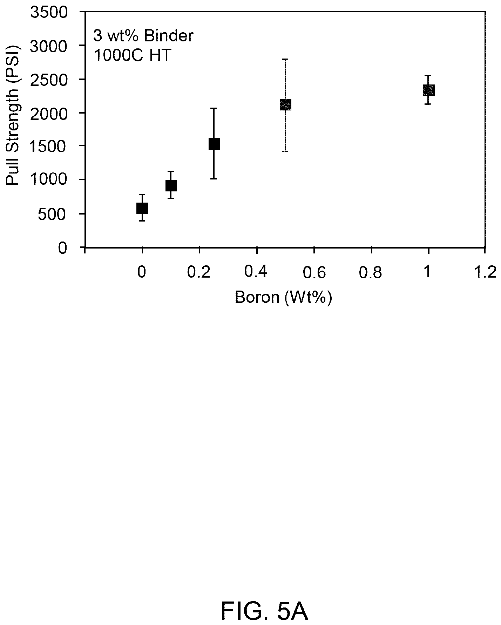

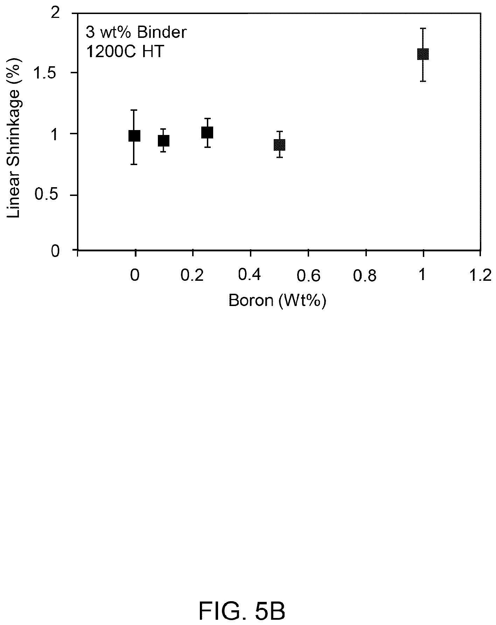

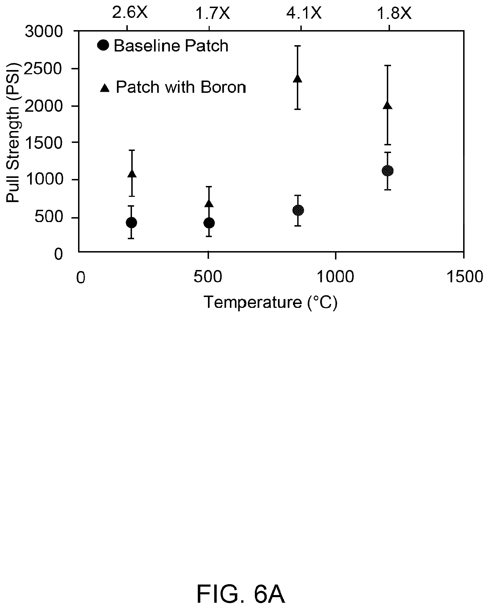

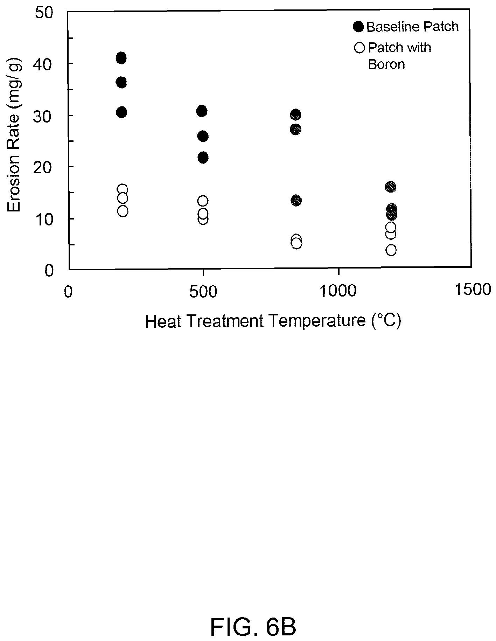

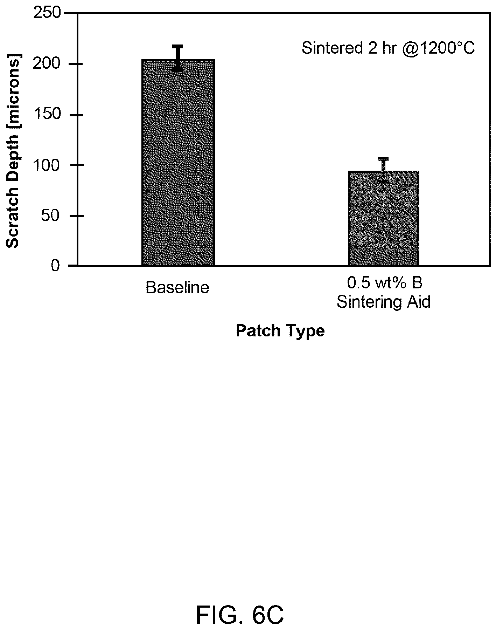

Example 1 provides patch slurry formulations that were evaluated for adhesive pull strength (see FIGs. 5A and 6A), linear shrinkage (see FIG. 5B), erosion rate (see FIG. 6B), and scratch depth (see FIG. 6C).

The tested patch slurries were prepared according to the following procedure. Silicone resin flakes were ground to a fine powder and dissolved in diacetone alcohol. PEG 400 and 500 nm boron powder were added to a binder-solvent solution and mixed using a planetary mixer. A mixture of Ytterbium Yttrium disilicate (YbYDS), Ytterbium disilicate (YbDS) and Yttrium monosilicate (YMS) powders were added to the slurry mixture. The mixture of YbYDS, YbDS, and YMS powders included the following particle distribution: 28 vol% fine (d50=0.90 micron), 26 vol% medium (d50=7.5 micron), and 46 vol% large (d50=26 micron). The relative amount of silicates was adjusted to achieve YbYDS as final composition in the sintered patch, after accounting for reaction with silica ash derived from the silicone resin binder. The mixture was initially mixed manually using a spatula to remove any agglomerates in the slurry and subsequently mixed in a planetary mixer at 1500 rpm for three minutes until the slurry was homogenous and viscous, but easy to spread with a spatula.

To test the prepared patch slurry, a SiC fiber reinforced SiC matrix CMC coupon was placed on a balance and a pre-determined mass of the patch slurry was transferred to the CMC coupon. The patch slurry was spread on the CMC coupon using a spatula. The patch slurry was tapped flat on the surface of the CMC coupon to achieve a flat, uniform coating of the patch slurry on the CMC coupon. The CMC coupon having the patch slurry thereon was dried to form a dried patch having a thickness of 500 microns and subjected to a heat treatment to form a CMC coupon having a sintered patch thereon.

The CMC coupon having the sintered patch thereon was then tested for pull strength, linear shrinkage, erosion rate, and scratch depth. The results are provided in FIGs. 5-6 as indicated herein.

FIG. 5A depicts the pull strength, measured at room temperature, of a patch slurry composition containing 3wt.% binder based on the total weight of the silicate-containing powders and varying amounts of a boron sintering aid after heat treating the dried patch for two hours at 1000°C in air. The vertical axis shows pull strength (in PSI) and the horizontal axis shows the amount of boron sintering aid, given as weight percent of boron relative to the total weight of the silicate-containing powders

FIG. 5B depicts the linear shrinkage of certain patch slurry compositions containing 3wt% binder material based on the total weight of the silicate-containing powders and varying amounts of boron sintering aid, after sintering for six hours at 1200°C in air. The weight percentages of boron are based on the total weight of the silicate-containing powders.

As shown in FIGs. 5A and 5B, the addition of boron as a sintering aid up to 0.5 weight % substantially improved adhesion pull strength without significantly affecting linear shrinkage.

FIG. 6A compares the room-temperature pull strength of a baseline patch containing no sintering aid with a patch formulation containing 0.5wt.% boron (based on the total weight of the silicate-containing powders). The horizontal axis shows heat treatment temperature to which the dried patch materials were subjected for two hours prior to testing. Addition of boron sintering aid is seen to improve patch strength over the entire temperature range from drying to sintering.

FIG. 6B depicts the erosion rate, measured at room temperature, of a baseline patch containing no sintering aid as compared to a patch with 0.5wt% boron (based on the total weight of the silicate-containing powders). The vertical axis shows erosion rate, in mg mass loss per g of solid particle erodent, and the horizontal axis shows heat treatment temperature to which the dried patch materials were subjected for two hours prior to testing. The addition of boron sintering aid is seen to improve erosion resistance over the entire temperature range from drying to sintering.

FIG. 6C depicts the scratch depth of a baseline patch containing no sintering aid as compared to a patch containing 0.5wt% of boron (based on the total weight of the silicate-containing powders). The vertical axis shows scratch depth in µm. Patched samples were sintered for two hours at 1200°C prior to testing. The addition of boron sintering aid is seen to improve scratch resistance of the as-sintered patch.

Further aspects of the invention are provided by the subject matter of the following clauses:

A method comprising: applying a patch slurry onto an environmental barrier coating layer on a silicon-based substrate, a silica layer on a silicon-based substrate, a silicon layer on a silicon-based substrate, a silicon-based substrate, or combinations thereof, wherein the patch slurry comprises a patch material in a fluid carrier, wherein the patch material comprises a silicate-containing powder, a binder, a viscosity modifier, and a boron-containing sintering aid; drying the patch slurry to form a dried patch material; and sintering the dried patch material in an oxidizing atmosphere to form a sintered patch.

The method of any preceding clause, wherein the silicate-containing powder comprises at least one of a rare earth monosilicate (RE₂SiO₅), a rare earth disilicate (RE₂Si₂O₇), and silica (SiO₂)

The method of any preceding clause, wherein the silicate-containing powder further comprises zirconium silicate (ZrSiO₄), a hafnium silicate (HfSiO₄), and an aluminum silicate (Al₆Si₂O₁₃).

The method of any preceding clause, wherein the patch slurry comprises silicate in an amount sufficient to form a silica-rich or borosilicate-rich glass during sintering.

The method of any preceding clause, wherein the viscosity modifier comprises one or more of polyethylene glycol (PEG), dimethylsiloxane, silicone oil, phthalates, adipates, glycerin, or combinations thereof.

The method of any preceding clause, wherein the viscosity modifier comprises from about 0.05 weight% to about 0.7 weight% of patch material.

The method of any preceding clause, wherien the boron-containing sintering aid comprises metallic boron.

The method of any preceding clause, wherien the boron-containing sintering aid comprises unoxidized boron.

The method of any preceding clause, wherein the boron-containing sintering aid comprises a median paticle size less than 1 µm.

The method of any preceding clause, wherein the boron-containing sintering aid comprises from about 0.4 weight% to about 2.0 weight% of the silicate-containing powder.

The method of any preceding clause, wherein the patch slurry comprises from about 50 volume % to about 75 volume % of patch material.

The method of any preceding clause, wherein the silicate-containing powder further comprises silicon, a silicon alloy, or a combination thereof.

The method of any preceding clause, wherein the patch slurry comprises the binder in an amount from about 2.0 weight % to about 9 weight % of the silicate-containing powder.

The method of any preceding clause, wherein the binder comprises a silicone-based material.

The method of any preceding clause, wherein the silicate-containing powder comprises a plurality of particles having a multimodal distribution.

The method of any preceding clause, wherein the silicate-containing powder further comprises: a plurality of small particles having a median particle size of less than 1 micron, a plurality of medium particles having a median particle size of from about 1 micron to about 8 microns; and a plurality of large particles having a median particle size of greater than 8 microns, wherein the plurality of small particles is present in an amount of from about 10 volume % to about 50 volume % of the total volume of silicate, the plurality of medium particles is present in an amount of from about 10 volume % to about 50 volume % of the total volume of silicate, and the plurality of large particles is present in an amount of from about 20 volume % to about 60 volume % of the total volume of silicate.

The method of any preceding clause, wherein the sintering the dried patch material comprises heating the dried patch material to a temperature between about 1000°C and about 1400°C for at least 1 minute.

The method of any preceding clause, wherein the oxidizing atmosphere comprises air or a combustion gas.

The method of any preceding clause, wherein the sintering of the dried patch material is carried out during operation of a component comprising the silicon-based substrate.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Further aspects of the invention are provided by the subject matter of the following clauses:
1. A method comprising: applying a patch slurry onto an environmental barrier coating layer on a silicon-based substrate, a silica layer on a silicon-based substrate, a silicon layer on a silicon-based substrate, a silicon-based substrate, or combinations thereof, wherein the patch slurry comprises a patch material in a fluid carrier, wherein the patch material comprises a silicate-containing powder, a binder, a viscosity modifier, and a boron-containing sintering aid; drying the patch slurry to form a dried patch material; and sintering the dried patch material in an oxidizing atmosphere to form a sintered patch.
2. The method of any preceding clause, wherein the silicate-containing powder comprises at least one of a rare earth monosilicate (RE₂SiO₅), a rare earth disilicate (RE₂Si₂O₇), and silica (SiO₂)
3. The method of any preceding clause, wherein the silicate-containing powder further comprises at least one of zirconium silicate (ZrSiO₄), a hafnium silicate (HfSiO₄), an aluminum silicate (Al₆Si₂O₁₃), or combinations thereof.
4. The method of any preceding clause, wherein the patch slurry forms a silica-rich or borosilicate-rich glass during sintering.
5. The method of any preceding clause, wherein the viscosity modifier comprises one or more of polyethylene glycol (PEG), dimethylsiloxane, silicone oil, phthalates, adipates, glycerin, or combinations thereof.
6. The method of any preceding clause, wherein the viscosity modifier comprises from about 0.05 weight% to about 0.7 weight% of patch material.
7. The method of any preceding clause, wherien the boron-containing sintering aid comprises elemental boron.
8. The method of any preceding clause, wherien the boron-containing sintering aid comprises unoxidized boron in a boron alloy or compound.
9. The method of any preceding clause, wherein the boron-containing sintering aid comprises a median paticle size less than 1 µm.
10. The method of any preceding clause, wherein the boron-containing sintering aid comprises from about 0.4 weight% to about 2.0 weight% of the silicate-containing powder.
11. The method of any preceding clause, wherein the patch slurry comprises from about 50 volume % to about 75 volume % of patch material.
12. The method of any preceding clause, wherein the silicate-containing powder further comprises silicon, a silicon alloy, or a combination thereof.
13. The method of any preceding clause, wherein the patch slurry comprises the binder in an amount from about 2.0 weight % to about 9 weight % of the silicate-containing powder.
14. The method of any preceding clause, wherein the binder comprises a silicone-based material.
15. The method of any preceding clause, wherein the silicate-containing powder comprises a plurality of particles having a multimodal distribution.
16. The method of clause 15, wherein the silicate-containing powder further comprises: a plurality of small particles having a median particle size of less than 1 micron, a plurality of medium particles having a median particle size of from about 1 micron to about 8 microns; and a plurality of large particles having a median particle size of greater than 8 microns, wherein the plurality of small particles is present in an amount of from about 10 volume % to about 50 volume % of the total volume of silicate, the plurality of medium particles is present in an amount of from about 10 volume % to about 50 volume % of the total volume of silicate, and the plurality of large particles is present in an amount of from about 20 volume % to about 60 volume % of the total volume of silicate.
17. The method of any preceding clause, wherein the sintering the dried patch material comprises heating the dried patch material to a temperature between about 1000°C and about 1400°C for at least 1 minute.
18. The method of any preceding clause, wherein the oxidizing atmosphere comprises air or a combustion gas.
19. The method of any preceding clause, wherein the sintering of the dried patch material is carried out during operation of a component comprising the silicon-based substrate.

## Claims

1. A method comprising:
applying a patch slurry onto an environmental barrier coating layer on a silicon-based substrate, a silica layer on a silicon-based substrate, a silicon layer on a silicon-based substrate, a silicon-based substrate, or combinations thereof, wherein the patch slurry comprises a patch material in a fluid carrier, wherein the patch material comprises a silicate-containing powder, a binder, a viscosity modifier, and a boron-containing sintering aid;
drying the patch slurry to form a dried patch material; and
sintering the dried patch material in an oxidizing atmosphere to form a sintered patch.

2. The method of claim 1, wherein the silicate-containing powder comprises at least one of a rare earth monosilicate (RE₂SiO₅), a rare earth disilicate (RE₂Si₂O₇), and silica (SiO₂)

3. The method of claim 1 or 2, wherein the silicate-containing powder further comprises at least one of zirconium silicate (ZrSiO₄), a hafnium silicate (HfSiO₄), an aluminum silicate (Al₆Si₂O₁₃), or combinations thereof.

4. The method of any preceding claim, wherein the patch slurry forms a silica-rich or borosilicate-rich glass during sintering.

5. The method of any preceding claim, wherein the viscosity modifier comprises one or more of polyethylene glycol (PEG), dimethylsiloxane, silicone oil, phthalates, adipates, glycerin, or combinations thereof.

6. The method of any preceding claim, wherein the viscosity modifier comprises from about 0.05 weight% to about 0.7 weight% of patch material.

7. The method of any preceding claim, wherien the boron-containing sintering aid comprises elemental boron and/or comprises an unoxidized boron in a boron alloy or compound.

8. The method of any preceding claim, wherein the boron-containing sintering aid comprises a median particle size less than 1 µm.

9. The method of any preceding claim, wherein the boron-containing sintering aid comprises from about 0.4 weight% to about 2.0 weight% of the silicate-containing powder.

10. The method of any preceding claim, wherein the patch slurry comprises from about 50 volume % to about 75 volume % of patch material.

11. The method of any preceding claim, wherein the silicate-containing powder further comprises silicon, a silicon alloy, or a combination thereof.

12. The method of any preceding claim, wherein the patch slurry comprises the binder in an amount from about 2.0 weight % to about 9 weight % of the silicate-containing powder.

13. The method of any preceding claim, wherein the binder comprises a silicone-based material.

14. The method of any preceding claim, wherein the silicate-containing powder comprises a plurality of particles having a multimodal distribution.

15. The method of any preceding claim, wherein the silicate-containing powder further comprises: a plurality of small particles having a median particle size of less than 1 micron, a plurality of medium particles having a median particle size of from about 1 micron to about 8 microns; and a plurality of large particles having a median particle size of greater than 8 microns, wherein the plurality of small particles is present in an amount of from about 10 volume % to about 50 volume % of the total volume of silicate, the plurality of medium particles is present in an amount of from about 10 volume % to about 50 volume % of the total volume of silicate, and the plurality of large particles is present in an amount of from about 20 volume % to about 60 volume % of the total volume of silicate.
